Europäisches Patentamt

(19) European Patent Office

Office européen des brevets

'⑪ Publication number: **0 156 575**
**B1**

(12) **EUROPEAN PATENT SPECIFICATION**

(45) Date of publication of patent specification: **19.04.89**

(21) Application number: **85301658.2**

(22) Date of filing: **11.03.85**

(51) Int. Cl.⁴: **F 16 L 21/08, F 16 B 7/04, F 16 L 3/00, E 21 B 19/10**

㊴ **Clamps.**

(30) Priority: **13.03.84 GB 8406580**
**18.06.84 GB 8415493**
**20.07.84 GB 8418514**

(43) Date of publication of application:
**02.10.85 Bulletin 85/40**

(45) Publication of the grant of the patent:
**19.04.89 Bulletin 89/16**

(84) Designated Contracting States:
**AT BE CH DE FR IT LI LU NL SE**

(56) References cited:
**DE-A-2 447 088**
**DE-C- 952 307**
**US-A-2 182 797**
**US-A-2 283 975**
**US-A-2 470 256**

(73) Proprietor: **Walmsley, Owen**
**4 Glenmore**
**Clayton-Le-Woods Chorley Lancashire (GB)**
(73) Proprietor: **Emmett, Robert**
**65 Chester Avenue**
**Lancaster LA1 4JA (GB)**

(72) Inventor: **Walmsley, Owen**
**4 Glenmore Clayton-Le-Woods**
**Chorley Lancashire (GB)**

(74) Representative: **Berry, Neil**
**Phoenix House 45 Cross Street**
**Manchester M2 4JF (GB)**

Courier Press, Leamington Spa, England.

## Description

This invention relates to clamps for gripping elongate elements.

US-A-2182797 discloses a gripping and coupling means comprising a body having an axis and providing a surface inclined to the axis, movable elements whicn extend through apertures in a support for the elements for operative engagement with the inclined surface and with a surface of an elongate member, the support being spaced from the body, the movable elements being movable radially relative to tne support. A mechanical connection between the support and the elongate member causes the support to move with the elongate member outwards relative to the body to bring the movable elements into engagement with the inclined surface.

According to one aspect of the invention a clamp for gripping elongate elements comprises a body having an axis and providing a surface inclined to the axis, movable elements which extend through apertures in a support for the elements for operative engagement with the inclined surface and with a surface of an elongate member, the support being spaced from the body, the movable elements being movable radially relative to the support, characterized in that the support is spaced from the elongate member and in that the apertures are shaped to permit both axial and radial movement of the elements under gravity for accommodating ovality of the elongate member.

Because the support is spaced from the body and the elongate member and the movable elements can move axially the clamp can accommodate ovality of the elongate member.

The apertures may have diverging walls as viewed in longitudinal section. This assists in accommodating ovality.

The apertures may be of greater axial dimension than angular dimension. This further assists in accommodating ovality.

The body may provide recesses for receiving the movable elements when not engaging the surface.

According to another aspect of the invention a clamp for gripping elongate members comprises a body having an axis and providing a surface inclined to the axis, movable elements which extend through apertures in a support for the elements for operative engagement with the inclined surface and with a surface of an elongate member, the support being spaced from the body, the movable elements being movable radially relative to the support, characterized in that the support is spaced from the elongate member and in that the apertures are shaped to permit both axial and radial movement of the elements for accommodating ovality of the elongate member and in that spring means are provided for urging the movable elements into engagement with the inclined surface.

There may be at least one annular sealing means for engaging the member.

One seal may engage an inclined surface so that axial movement of the seal moves the seal radially inwards.

The body may provide two said inclined surfaces and movable elements, said surfaces being oppositely inclined.

This provides a coupling.

Each movable element may be a spherical ball.

There may be a plurality of axially spaced sets of said movable elements, each set comprising a plurality of angularly spaced movable elements.

The invention may be performed in various ways and some specific embodiments with possible modifications will now be described by way of example with reference to the accompanying drawings, in which:

Fig. 1 is a half vertical section through a clamp or collet associated with a length of pipe;

Fig. 1A is an enlarged view of part of Fig. 1;

Figs. 1B and 1D show a modification;

Fig. 1C shows another position;

Fig. 2 is a half vertical section of an internal clamp; and

Figs. 2A and 2B are similar to Figs. 1A and 1B;

Fig. 2C shows a simplified section;

Fig. 3 is an axial longitudinal section through a pipe connector and pipe;

Fig. 3A is part of Fig. 3 on an enlarged scale;

Fig. 3B shows a modification;

Fig. 3C is a simplified transverse section;

Fig. 4 is similar to Fig. 3 showing a modified arrangement;

Fig. 5 is an axial section of a further embodiment;

Fig. 6 shows a connection manifold;

Fig. 7 shows another arrangement;

Fig. 8 shows an axial section of half a further coupling; and

Fig. 9 is a longitudinal section through another embodiment.

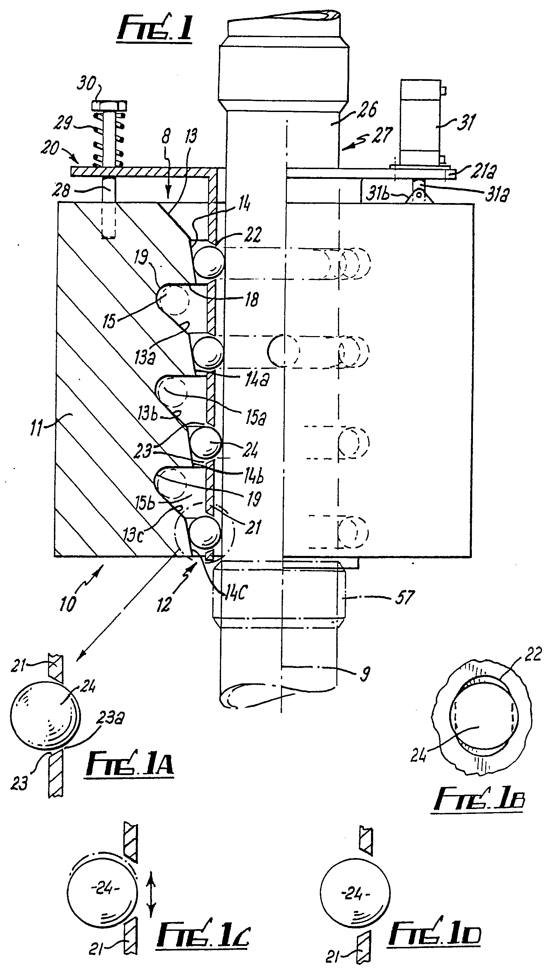

Referring to Fig. 1, a clamp or collet 10 comprises a body 11, for example of forged steel, in the form of a ring having a central longitudinal circular cross-section aperture 12 therethrough. Aperture 12 has at the upper end a first recess 8 providing tapered surface portion 13, which extends inwardly uniformly as it extends downwardly, leading to a second tapered surface portion 14 inclined inwardly at a smaller angle to the longitudinal axis 9 than the tapered portion 13. The tapered portion 14 leads to a radially enlarged recess 15 which has a lower tapered surface 13a similar to surface 13 which leads to tapered portion 14a similar to portion 14. Tapered portion 14a leads to recess 15a similar to recess 15, and so on. In the arrangement shown there are four recesses 8, 15 etc. and four tapered portions 14, 14a etc. There could be one, two, three or more than four, such sequential recesses and tapered surface portions, depending on particular uses. The upper surface 18 of recess 15 is at right angles to axis 9 and is connected to surface portion 13a by curved portion 19. The taper surfaces 14 etc. are case hardened.

A ball cage or support 20 comprises a tubular portion 21 extending in the aperture 12 and a flat horizontal top portion 21a. The portion 21 is parallel to axis 9 portion 21 has a number of axially spaced rows of apertures 22, the apertures in each row being equiangularly spaced about the axis 9. Each aperture 22 is of circular section with the surface 23 defining the aperture 22 diverging uniformly as it extends radially outwardly. Each aperture 22 in the position shown receives a spherical ball 24, for example of hardened steel, the balls 24 engaging the outer surface 26 of a pipe 27 and the surfaces 14, 14a, 14b, 14c. The radially inner end of aperture 22 has a diameter less than the diameter of the associated ball 24.

A plurality of equi-angularly spaced bolts 28 are removably threaded into threaded bores in the upper part of the body 11 and extend through the flat cage portion 21a. Helical compression springs 29 extend between cage portion 21a and the heads 30 of the bolts 28 to urge the cage downwards, with balls 24 on surfaces 14, 14a, 14b, 14c. There may for example be twenty four balls in each set but there could be a different number, for example one, in which case the balls in the three sets would be equiangularly spaced.

Because the balls 24 engage tapered surfaces 14, 14a, 14b, 14c they are urged radially inwardly with a wedging action by downward movement of the cage 20 to grip firmly the surface 26 and prevent downward movement of the pipe 27. In this condition the upper edges of the apertures would engage the balls.

If the cage 20 is moved upwards, the balls 24 move up the taper surfaces thus moving radially outwardly and may respectively move into recesses 8, 15, 15a, 15b, so that the pipe 26 is no longer clamped. In this condition the lower edges of the apertures would engage the balls. A radial clearance is shown at 23a bstween the illustrated balls and the radially inner ends of the apertures. Depending on pipe diameter the balls may adopt differing radial and axial positions and the diverging wall 23 enhances the possibility of such movement and enables the clamp to accommodate a degree of ovality in the pipe cross-section, which ovality may be localised. This is shown in Fig. 1C. Dependent on the radial clearance between the pipe and sleeve 21 a degree of ovality can be accommodated whilst retaining all the balls as gripping elements.

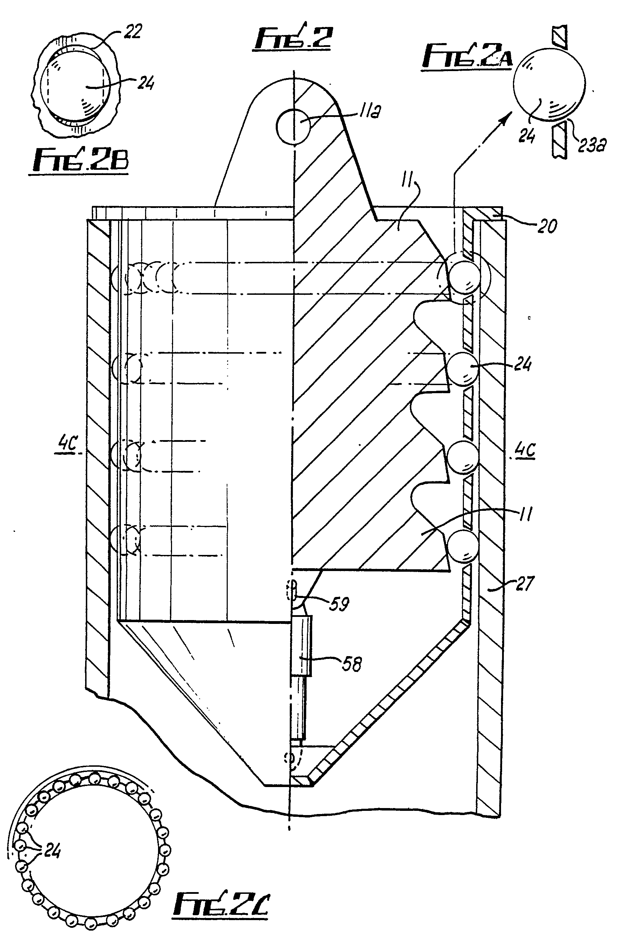

In order better to accommodate a degree of ovality in the pipe, particularly large diameter pipes e.g. 90 cm, where a given tolerance in diameter means a greater ovality, the apertures 22 may be axially elongated so as to form a parallel sided slot, as seen in Figs. 1B and 2B in which case all the balls may grip simultaneously. The axial dimension would depend on the angle of inclination to the axis of the taper surfaces 13, 13a, 13b, 13c and the amount of ovality it is desired to accommodate. The angle of inclination can be different in different embodiments. For example the angle of inclination could be between 4° and 20°. The smaller the angle the greater the radial loading for a given downward load.

The ovality may be caused in manufacture of the pipe or subsequently.

The cage 20 can be moved up or down to engage or disengage the wedge by a plurality of angularly spaced hydraulic cylinder/piston rams 31, in addition to the effect of gravity. The pistons 31a of the rams 31 are connected to the portion 11 conveniently through pivotal connection 31b, and the cylinder body of the ram 31 is connected to plate 21a by a flange connection.

In a modification the recesses 8, 15, 15a, 15b, are omitted. In one arrangement the balls 24 effect a gripping action under gravity i.e. the springs 29 could be omitted.

Because of the diverging shape of surface 23 the surface 23 may tend to roll the associated ball which may be helpful in some circumstances.

The balls 24 will be wedged between the pipe 27 and the tapered surfaces under the action of gravity. Because of the effect of gravity, the pipe 27 will move downwards. Friction between the balls and the pipe will cause the balls to roll down the tapers and thus apply a radial load to grip the pipe 27 and prevent any further downward movement of the pipe. The clamp is thus self-engaging which is to be contrasted with a hydraulically-engaged wedge which requires an external power source.

The springs 29 could be replaced by hydraulic rams, for example the rams 31 could be modified so as to be capable of being energized to assist the gripping of the clamp.

In a modification, the balls 24 are arranged to engage the interior surface of a pipe. Thus the portion 21a is radially inwards of cage 21 and the tapered surfaces are formed on the exterior of body 11 which is arranged to extend into the pipe.

One use of the clamp 10 is in the oil industry, specifically drilling.

Instead of cylinders 31, a screw device can be used for example manually operated.

When used in drilling, the clamp device or devices may be used to grip the drill string, or the casing through which the drill string may extend. In some cases the drill bit is carried on the casing.

It will be understood that the pipe or casing could be rotated whilst being supported by the clamp or clamps against axial movement.

Fig. 2 shows an internal form of the clamp, which is self-engaging and self-dis-engaging. On being lowered, the ball cage 20 enters the pipe 27 and allows the body 11 to move down and the balls 24 to retract radially inwards. The load is then slowly applied by raising body 11 and the pipe gripped by the balls 24 which are moved outwards. On disengagement, the load is removed and the body 11 moves down as before.

The clamp is then quickly removed and disengaged. A hydraulic damper 58 pivoted to cage 20 and body 11 is attached to the body and cage by pins one of which is engaged in an axial slot 59 and allows a certain amount of free movement of the body 11 within the ball cage 12. The damper acts as a time delay 58. Thus, when it is desired to release the pipe, the body 11 is lowered, compressing the damper 58, and the balls 24 move inwards releasing the grip. Before the damper 58 can return to its extended datum position the whole clamp is lifted out of the end of the pipe or casing.

The clamp has a lifting eye 11a.

Typical use of the clamp Fig. 2 is for the automatic stacking of drill pipes or for the handling of drill casings, making the use of pad eyes and hydraulic clamps unnecessary.

In another internal form of clamp the arrangement of Fig. 2 is provided with springs 29 and rams 31 as in Fig. 1. Dependent on the radial clearance between the pipe and sleeve 21 a degree of ovality can be accommodated whilst retaining all the balls as gripping elements.

In order better to accommodate a degree of ovality in the pipe particularly large diameter pipes e.g. 90 cm, where a given tolerance in diameter means a greater ovality, the apertures 22 may be axially elongated so as to form a parallel sided slot, as seen in Figs. 1B and 2B in which case all the balls may grip simultaneously. The axial dimension would depend on the angle of inclination to the axis of the taper surfaces 13, 13a, 13b, 13c and the amount of ovality it is desired to accommodate. The angle of inclination can be different in different embodiments. For example the angle of inclination could be between 4° and 20°. The smaller the angle the greater the radial loading for a given downward load.

The ovality may be caused in manufacture of the pipe or subsequently.

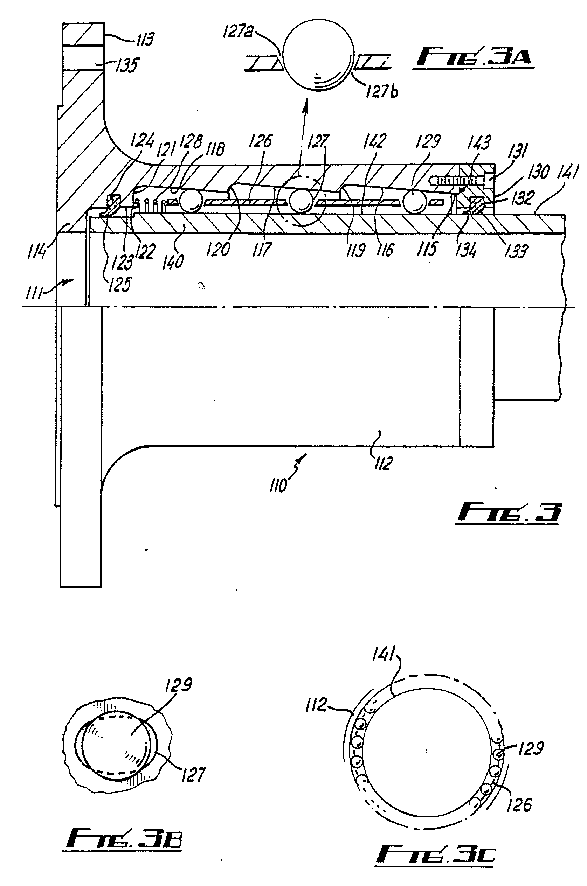

Referring to Figs. 3, 3A and 3C, a pipe connector or pipe clamp 110 has a through-bore 111 having a central axis and comprises a cylindrical part 112 having at one end a radially outer annular flange 113 and a radially inner annular flange 114. The surface of the bore 111 has at the axial outer end a short length 115 of uniform diameter, three successive portions 116, 117, 118 which extend radially outwardly as they extend axially inwardly connected by curved portions 119, 120, 121, the portion 121 leading to an axially outwardly facing lip 122 leading to an axial portion 123 leading to the flange 114. The portion 123 has an annular groove for receiving an annular seal 124 having a flexible inner part 125.

A cylindrical housing or cage 126 has three axially spaced sets of apertures 127, each set comprising a plurality of equiangularly spaced apertures, for example twenty four apertures. The side walls 127a of the apertures 127 diverge at a uniform angle, as they extend radially outwardly. A helical spring 128 engages over the lip 122 and urges the cage 126 axially away from the flange 114. Each aperture 127 receives a spherical ball 129. The apertures 127 are circular and the radially inner diameter is less than the diameter of the respective ball 129. The balls in the respective sets of apertures engage bore surfaces 119, 120, 121. After insertion of the spring, cage and balls into the cylindrical part 112 an annular end cap 130 is attached to the axially outer free end of the part 112 by angularly spaced bolts 131. The end cap 130 has an annular groove 132 in its radially inner surface and this receives an annular seal 133 having a flexible inner part 134.

The flange 113 has angularly spaced apertures 135 by which it may be bolted to a supporting structure. An annular seal 143 in the axially inwardly face of the end cap engages the axially outwardly facing end of the cylindrical part 112.

In use, an end 140 of a pipe 141, whose inner diameter in the example shown is the same as that of the flange 114 but could be smaller or larger, is pushed into the connector 110 until the end of the pipe abuts a stop which in the example shown is the flange 114. During this movement the seal parts 125, 134 are deflected and sealingly engage the outer surface 142 of the pipe 141 to form pressure-tight seals.

The balls 129 engage the surface 142 and by friction are moved axially and outwardly in contact with portions 119, 120, 121 and against the action of the spring 128. The pipe 141 is now held by the spring 128 urging the balls 129 into engagement with the taper surfaces 116, 117, 118 and the pipe surface 142 and this force is sufficient to resist axial separating movement of the pipe from the connector. In general the pipe can only be removed by removing the end cap 130 and using a tool to push the cage 126 to compress the spring 128 and move the balls 129 radially outwardly.

In a normal working condition there is a clearance 127b between the radially inner end of the aperture wall 127a and the respective ball 129.

In a modification, portions 120 and/or 121 and associated balls 129, are omitted so that there may be one, two, or more than three sets of balls and associated tapered surface, the balls being suitably angularly spaced.

Instead of the or each tapered surface being annular, they may be local tapers machined individually for cooperation with the respective ball, the individual taper surfaces being spaced angularly around the bore or axis.

Dependent on the radial clearance between the pipe and sleeve 126 a degree of ovality can be accommodated whilst retaining all the balls as gripping elements as described with reference to Fig. 1C. There may be localized peaks or ovalities which can be accommodated by axial and radial movement of one or more balls.

In order better to accommodate a degree of ovality in the pipe particularly large diameter pipes e.g. 90 cm, where a given tolerance in diameter means a greater ovality, the apertures 127 may be axially elongated so as to form a parallel sided slot, as seen in Fig. 1B and 1D in which case all the balls may grip simultaneously. The axial dimension of the aperture would depend on the angle of inclination of the taper surfaces to the axis and the amount of ovality it is desired to accommodate. The angle of inclination can be different in different embodiments. For example the angle of inclination could be between 4o and 20o. The smaller the angle the greater the radial loading for a given downward load.

The ovality may be caused in manufacture of the pipe or subsequently. The surfaces 116, 117, 118 are preferably case hardened. In some embodiments the spring is omitted. In some embodiments, seal 133 is omitted.

In one arrangement flange 114 is omitted, and seals 143, 133, cap 130 and bolts 131 are omitted.

There could be only one ball for each tapered surface, in which case the balls would be equiangularly spaced as viewed axially, or a number other than twenty four.

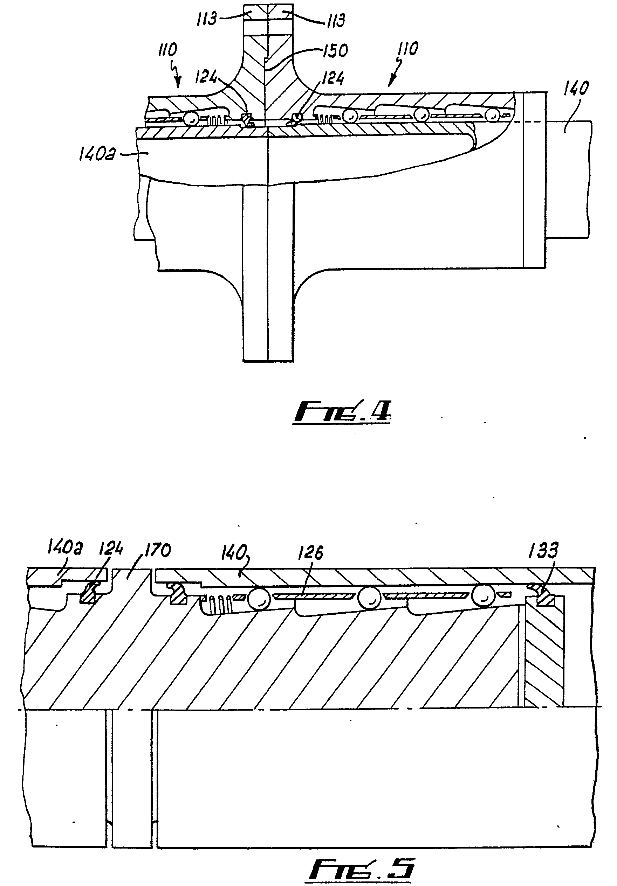

As shown in Fig. 4, there may be two connectors 110 with abutting flanges 113 (flange 114 omitted) so as to connect or couple two pipes 140, 140a. In a further arrangement the connector of Fig. 4 has an integral flange 113 so that there is no junction 150.

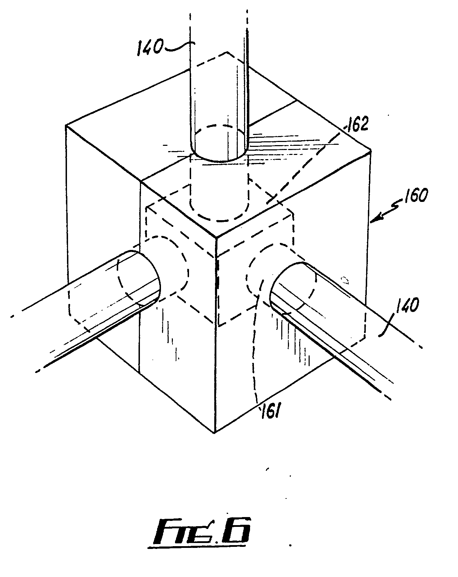

As shown in Fig. 5 the pipe 140 can be radially outside the tapered surfaces. There is shown an optional location spigot 170.

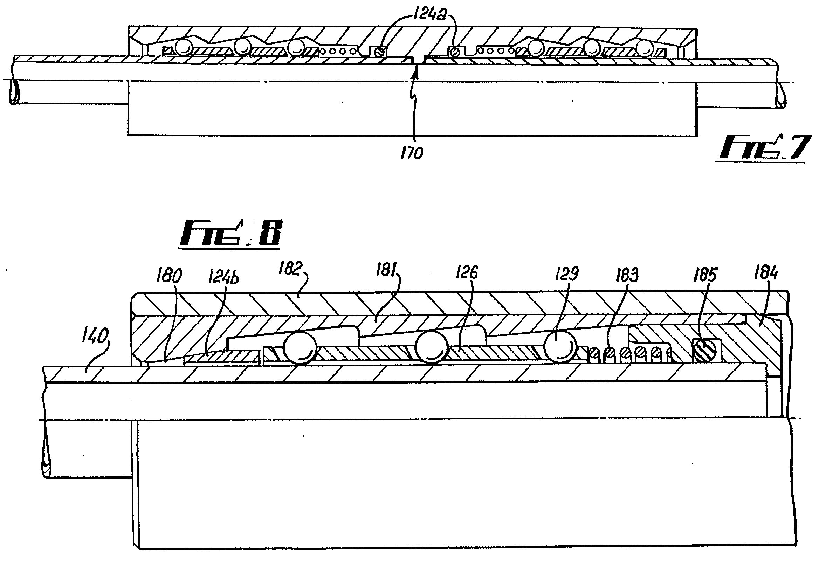

As shown in Fig. 6, the cylinder 112 can take the form of a block 160 e.g. square or rectangular, having several bores or ports 161, each machined to provide taper surfaces with cage and balls, as above, so that several pipes can be secured in the block, which acts as a connection manifold, so that several pipes are connected in close proximity to each other and with a central manifold zone 162.

When the pipe 140 is pressurized internally it is subject to the pressure of balls 129, the balls may swage the pipe due to the action of the balls on the hardened faces 116, 117, 118, reducing ovality.

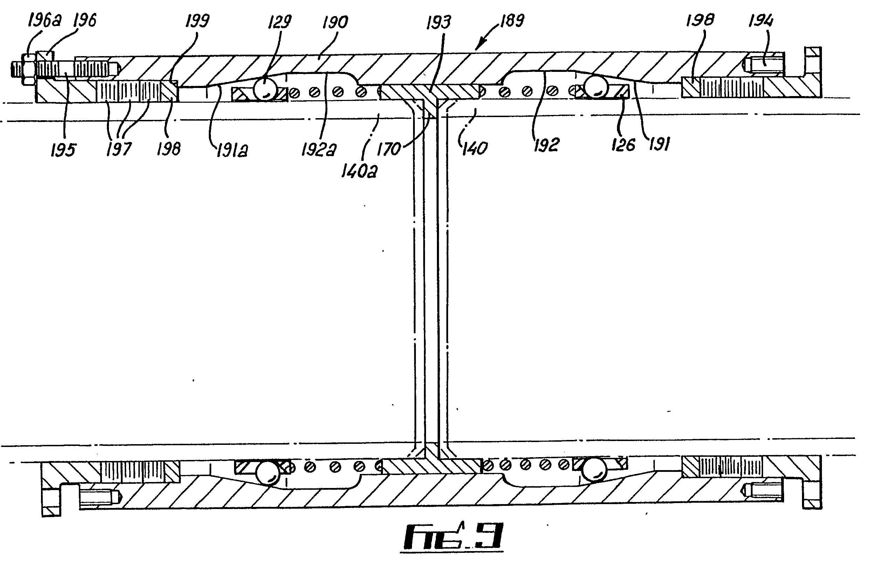

Fig. 7 shows an arrangement similar to Fig. 4 but seals 124 are in the form of resilient O-rings 124a and, in the form shown, caps 130 are omitted. Again the inner ends of the pipes may abut a spigot 170, or the spigot is absent and the pipes abut each other.

In the arrangement of Fig. 8 the coupling has an O-ring primary seal 185 and a metal secondary seal 124b.

When axial pressure is applied to the pipe during insertion of the pipe into the connector the balls 129 swage the pipe, in a similar manner to the arrangements already mentioned, until all the axial clearance is taken up between the ball retaining sleeve 126 and the metal seal 124b. Further internal pressure in the pipe now pushes the ball retaining sleeve onto the annular metal seal 124b which is pushed into a conical taper 180 thus swaging the metal seal onto the pipe.

The taper surfaces are formed on a sleeve 181 which may be a shrink fit in the body 182 of the fitting.

To assemble the fitting the metal seal is placed into the taper sleeve 181 followed by the ball retaining sleeve 126 complete with balls. The spring 183 is then placed into the taper sleeve and O-ring seal retaining housing 184 complete with O-ring seal 185 may then be pressed into the taper sleeve 181.

The housing 184 provides a locating spigot 186 for the end of the pipe 140.

The sub-assembly consisting of items 129, 126, 124b, 181, 184, 185, 183 may now be shrunk into the body of the fitting 182. Again the apertures 127 may have a greater axial dimension than angular or circumferential dimension.

The housing 184 engages the outer surface of the pipe, the inner surface of the fitting 182 and the inner surface of the end region of sleeve 181 and abuts the end of the sleeve 181 and provides an annular groove for receipt of the O-ring. In the case shown the spring 183 is at the axially inner end of the sleeve 126.

If for example the fitting were a straight coupling, two sub-assemblies would be required one at each end of the body or for a T-fitting three sub-assemblies would be required.

It will be understood that if the pipe 140 is removed the balls do not drop out but are retained by the support 126.

In the arrangement of Fig. 9 a pipe coupling 189 has a cylindrical member 190 inner bore defining two tapered surfaces 191, 191a leading to axial portions 192, 192a in which the balls 129 can locate and not press on pipes 140, 140a. A central annular element 193 provides locating spigot 170 and each tapered surface cooperates with a single set of balls 129. The ends of the member 190 have angularly spaced axially extending threaded recesses 194 for receiving bolts 195 (only one shown) with nut 196a to hold end flanges 196 against annular packing rings 197 which abut metal ring 198 abutting shoulder 199. The rings 197 seal against the pipe. The apertures in the cage 126 may be axially elongated to accommodate a degree of ovality.

The arrangements described can be used to connect one or more pipes to other structure or one or more pipes together and may be used as a pipe clamp. Thus the device of Fig. 3 can be attached to a lifting mechanism, lowered on to a vertical pipe - the balls moving into zones 119, 120, 121, and then lifted so that the balls move on to the tapered surfaces and grip the pipe which can then be lifted.

## Claims

1. A clamp for gripping elongate elements comprising a body (11, 112) having an axis and providing a surface (14, 118, 191) inclined to the axis, movable elements (24, 129) which extend through apertures (22) in a support (21, 126) for the elements for operative engagement with the inclined surface and with a surface of an elongate member (26, 27, 140), the support (21, 126) being spaced from the body (11, 112), the movable elements (24, 129) being movable radially relative to the support (21, 126), characterized in that the support (21, 126) is spaced from the elongate member (26, 27, 140) and in that the apertures (22) are shaped to permit both axial and radial movement of the elements (24, 129) under gravity for accommodating ovality of the elongate member (26, 27, 140).

2. A clamp as claimed in Claim 1, in which the apertures (22) have diverging (23a, 127a) walls as viewed in longitudinal section.

3. A clamp as claimed in Claim 1 or Claim 2, in which the apertures (22) are of greater axial dimension than angular dimension.

4. A clamp as claimed in any preceding claim, in which the body (11, 112) provides recesses (15a, 15b, 15c; 119, 120, 121) for receiving the movable elements when not engaging the surface.

5. A clamp for gripping elongate elements comprising a body (11, 112) having an axis and providing a surface (14, 118, 191) inclined to the axis, movable elements (24, 129) which extend through apertures (22) in a support (21, 126) for the elements for operative engagement with the inclined surface and with a surface of an elongate member (26, 27, 140), the support (21, 126) being spaced from the body (11, 112), the movable elements (24, 129) being movable radially relative to the support (21, 126), characterized in that the support (21, 126) is spaced from the elongate member (26, 27, 140) and in that the apertures (22) are shaped to permit both axial and radial movement of the elements (24, 129) for accommodating ovality of the elongate member (26, 27, 140) and in that spring means (29, 128, 183) are provided for urging the movable elements (24, 129) into engagement with the inclined surface (118, 191).

6. A clamp as claimed in Claim 5, comprising at least one annular sealing means (125 or 134) for engaging the member.

7. A clamp as claimed in Claim 6, in which one seal (124b) engages an inclined surface (180) so that axial movement of the seal moves the seal radially inwards.

8. A clamp as claimed in any of Claims 4 to 7, said body providing two said inclined surfaces and movable elements, said surfaces being oppositely inclined.

9. A clamp as claimed in any preceding claim, in which each movable element (24, 129) is a spherical ball.

10. A clamp as claimed in any preceding claim, comprising a plurality of axially spaced sets of said movable elements, each set comprising a plurality of angularly spaced movable elements (24 or 129).

**Patentansprüche**

1. Klemmvorrichtung zum Ergreifen länglicher Bauteile, mit einem Gehäuse (11, 112), das eine Achse aufweist und eine gegenüber dieser Achse geneigte Fläche (14, 118, 191) bildet, mit beweglichen Elementen (24, 129) die sich Öffnungen (22) in einem Tragkäfig (21, 126) für diese Elemente erstrecken, um in Wirkungseingriff mit der geneigten Fläche und mit einer Fläche eines länglichen Bauteils (26, 27, 140) zu treten wobei der Tragkäfig (21, 126) im Abstand zu dem Gehäuse (11, 112) angeordnet ist und die beweglichen Elemente (24, 129) radial relativ zu dem Tragkäfig (21, 126) bewegbar sind, dadurch gekennzeichnet, daß der Tragkäfig (21, 126) im Abstand zu dem länglichen Bauteil (26, 27, 140) angeordnet ist und daß die Öffnungen (22) so gestaltet sind, daß sie sowohl eine axiale als auch eine radiale Bewegung der Elemente (24, 129) unter Schwerkrafteinfluß ermöglichen, um sich an eine ovale Gestalt des länglichen Bauteils (26, 27, 140) anzupassen.

2. Klemmvorrichtung nach Anspruch 1, bei der die Öffnungen (22) in einem Längsschnitt gesehen divergierende Wände (23a, 127a) aufweisen.

3. Klemmvorrichtung nach Anspruch 1 oder 2, bei der die Öffnungen (22) eine größere axiale Abmessung als ihre Winkelabmessung haben.

4. Klemmvorrichtung nach einem der vorangehenden Ansprüche, bei der das Gehäuse (11, 112) Ausnehmungen (15a, 15b, 15c; 119, 120, 121) zur Aufnahme der beweglichen Elemente aufweist, wenn diese nicht in Eingriff mit der Fläche stehen.

5. Klemmvorrichtung zum Ergreifen länglicher Bauteile, mit einem Gehäuse (11, 112), das eine Achse aufweist und eine gegenüber dieser Achse geneigte Fläche (14, 118, 191) bildet, mit beweglichen Elementen (24, 129), die sich Öffnungen (22) in einem Tragkäfig (21, 126) für diese Elemente erstrecken, um in Wirkungseingriff mit der geneigten Fläche und mit einer Fläche eines länglichen Bauteils (26, 27, 140) zu treten, wobei der Tragkäfig (21, 126) im Abstand zu dem Gehäuse (11, 112) angeordnet ist und die beweglichen Elemente (24, 129) radial relativ zu dem Tragkäfig (21, 126) bewegbar sind, dadurch gekennzeichnet, daß der Tragkäfig (21, 126) im Abstand zu dem länglichen Bauteil (26, 27, 140) angeordnet ist, daß die Öffnungen (22) so gestaltet sind, daß sie sowohl eine axiale als auch eine radiale Bewegung der Elemente (24, 129) ermöglichen, um sich an eine ovale Gestalt des länglichen Bauteils (26, 27, 140) anzupassen, und daß Federelemente (29, 128, 183) vorgesehen sind, um die beweglichen Elemente (24, 129) in Eingriff mit der geneigten Fläche (118, 191) zu drücken.

6. Klemmvorrichtung nach Anspruch 5 mit mindestens einer ringförmigen Dichteinrichtung (125 oder 134) für einen Eingriff an dem Bauteil.

7. Klemmvorrichtung nach Anspruch 6, bei der eine der Dichtungen (124b) mit einer geneigten Fläche (180) in Eingriff steht, so daß eine axiale Bewegung der Dichtung diese Dichtung radial nach innen bewegt.

8. Klemmvorrichtung nach einem der Ansprüche 4 bis 7, bei der das Gehäuse zwei geneigte Flächen sowie bewegliche Elemente aufweist, wobei die Flächen entgegengesetzt geneigt sind.

9. Klemmvorrichtung nach einem der vorangehenden Ansprüche, bei der jedes bewegliche Element (24, 129) eine Kugel ist.

10. Klemmvorrichtung nach einem der vorangehenden Ansprüche, die mehere, axial im Abstand angeordnete Gruppen der beweglichen Elemente aufweist, wobei jede Gruppe mehrere im Winkelabstand zueinander angeordnete bewegliche Elemente (24 oder 129) aufweist.

**Revendications**

1. Bride de serrage pour agripper des éléments oblongs comprenant un corps (11, 112) présentant un axe et comportant une surface (14, 118, 191) inclinée sue l'axe des éléments mobiles (24, 129) qui s'étendent à travers des trous (22) d'un support (21, 126) qui leur est affecté pour entrer en contact actif avec la surface inclinée et avec une surface d'un élément oblong (26, 27, 140), le support (21, 126) étant espacé du corps (11, 112), les éléments mobiles (24, 129) étant mobiles radialement par rapport au support (21, 126), caractérisé en ce que le support (21, 126) est espacé de l'élément oblong (26, 27, 140) et en ce que les trous (22) sont conformés pour permettre un mouvement des élément (24, 129) tant axial que radial sous l'effet de la pesanteur pour s'adapter à une ovalité de l'élément oblong (26, 27, 140).

2. Bride de serrage selon la revendication 1, dans laquelle les trous (22) vus en coupe longitudinale ont des parois (23a, 127a) divergentes.

3. Bride de serrage selon la revendication 1 ou la revendication 2, dans laquelle les trous (22) ont une dimension axial plus grande que leur dimension angulaire.

4. Bride de serrage selon une quelconque revendication précédente, dans laquelle le corps (11, 112) présente des évidemments (15a, 15b, 15c; 119, 120, 121) pour recevoir les éléments mobiles lorsqu'ils ne portent pas contre la surface.

5. Bride de serrage pour agripper des éléments oblongs comprenant un corps (11, 112) présentant un axe et comportant une surface (14, 118, 191) inclinée sur l'axe, des éléments mobiles (24, 129) qui s'étendent à travers des trous (22) d'un support (21, 126) affecté aux éléments pour entrer en contact actif avec la surface inclinée et avec une surface d'un élément oblong (26, 27, 140), le support (21, 126) étant espacé du corps (11, 112), les éléments mobiles (24, 129) étant mobiles radialement par rapport au support (21, 126), caractérisé en ce que le support (21, 126) est espacé de l'élément oblong (26, 27, 140) et en ce que les trous (22) sont conformes pour permettre un mouvement des éléments (24, 129) tant axial que radial pour s'adapter à une ovalité de l'élément oblong (26, 27, 140) et en ce que des moyens du type ressort (29, 128, 183) sont disposés pour solliciter les éléments mobiles (24, 129) en engagement avec la surface inclinée (118, 191).

6. Bride de serrage selon la revendication 5, comprenant au moins un moyen d'étanchéité annulaire (125 ou 134) pour porter contre l'élément.

7. Bride de serrage selon la revendication 6, dans laquelle un joint d'étanchéité (124b) porte contre une surface inclinée (180) en sorte qu'un déplacement axial du joint d'étanchéité déplace celui-ci radialement vers l'interieur.

8. Bride de serrage selon l'une quelconque des revendications 4 à 7, ledit corps présentant deux susdites surfaces inclinées et des éléments mobiles, lesdites surfaces étant inclinées à l'opposé.

9. Bride de serrage selon une quelconque revendication précédente, dans laquelle chaque élément mobile (24, 129) est une bille sphérique.

10. Bride de serrage selon une quelconque revendication précédente, comprenant une pluralité d'ensembles axialement espacés desdites éléments mobiles, chaque ensemble comprenant une pluralité d'éléments mobiles angulairement espacés (24 ou 129).

FIG.1

FIG.1A

FIG.1B

FIG.1C

FIG.1D

FIG.2B

FIG.2

FIG.2A

FIG.2C

FIG.3A

FIG.3

FIG.3B

FIG.3C

_Fig.4_

_Fig.5_

FIG.6

FIG. 7

FIG. 8

FIG. 9